(19) Europäisches Patentamt
European Patent Office
Office européen des brevets

(11) **EP 4 770 249 A1**

(12) **EUROPEAN PATENT APPLICATION**

(43) Date of publication:
**01.07.2026 Bulletin 2026/27**

(21) Application number: **25208922.2**

(22) Date of filing: **15.10.2025**

(51) International Patent Classification (IPC):
**H04W 72/50** *(2023.01)* **H04W 84/12** *(2009.01)*
**H04W 72/121** *(2023.01)* **H04W 72/566** *(2023.01)*

(52) Cooperative Patent Classification (CPC):
**H04W 72/535; H04W 84/12;** H04W 72/121;
H04W 72/566

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **30.12.2024 US 202419006164**

(71) Applicant: **TP-Link Systems Inc.**
**Irvine, California 92618 (US)**

(72) Inventor: **DIAO, Wenhao**
**Shenzhen, 518000 (CN)**

(74) Representative: **Marks & Clerk LLP**
**15 Fetter Lane**
**London EC4A 1BW (GB)**

(54) **ACCESS POINT DEVICE AND METHOD FOR SCHEDULING WIRELESS TRANSMISSIONS**

(57) The present disclosure provides a method, access point (AP) device, wireless communication system and computer program product for scheduling wireless transmissions. The method is implemented in an AP device and includes: obtaining a previous scheduled time of each of a plurality of client devices at which each client device was scheduled by the AP during a respective previous scheduling cycle; determining, for each of the plurality of client devices, a scheduling weight of the client device based on a time interval from the previous scheduled time of the client device to a current scheduling cycle; and scheduling a wireless transmission to at least one of the plurality of client devices for the current scheduling cycle based on the scheduling weights.

**200**

S210 — Obtaining a previous scheduled time of each of a plurality of client devices at which each client device was scheduled by an access point during a respective previous scheduling cycle

S220 — Determining, for each of the plurality of client devices, a scheduling weight of the client device based on a time interval from the previous scheduled time of the client device to a current scheduling cycle

S230 — Scheduling a wireless transmission to at least one of the plurality of client devices for the current scheduling cycle based on the scheduling weights

Fig. 2

EP 4 770 249 A1

**Description**

**CROSS REFERENCE TO RELATED APPLICATIONS**

This application claims the benefit of U.S. Non-Provisional Patent Application No. 19/006,164, filed on December 30, 2024 and titled "ACCESS POINT DEVICE AND METHOD FOR SCHEDULING WIRELESS TRANSMISSIONS". The entire disclosure of the aforementioned application is incorporated by reference as part of the disclosure of this application.

**TECHNICAL FIELD**

The present disclosure relates to wireless communication, and more specifically, to a method, access point (AP) device, wireless communication system and computer program product for scheduling wireless transmissions.

**BACKGROUND**

In recent years, wireless LANs (WLANs) have been widely deployed to deliver Internet access to various mobile users. Accordingly, a scheduling strategy used by an AP device in a WLAN network is fundamental for managing downlink transmissions scheduled to different client devices, to achieve the purpose of enhancing the efficiency of resource use and improving client experience during the wireless scheduling.

With technical advancements in WLAN, the scheduling strategies have also evolved over time, which allows for improved data transfer efficiency and enhanced user experience, particularly in multi-client environments. However, there is still a need for enhancements on the scheduling strategy used in WLAN systems.

**SUMMARY**

At least in view of the above technical problems, the present disclosure provides a method, access point (AP) device, wireless communication system and computer program product for scheduling wireless transmissions.

According to one embodiment of the present disclosure, there is provided a method for scheduling wireless transmissions, the method implemented in an AP device and comprising: obtaining a previous scheduled time of each of a plurality of client devices at which each client device was scheduled by the AP during a respective previous scheduling cycle; determining, for each of the plurality of client devices, a scheduling weight of the client device based on a time interval from the previous scheduled time of the client device to a current scheduling cycle; and scheduling a wireless transmission to at least one of the plurality of client devices for the current scheduling cycle based on the scheduling weights.

According to another embodiment of the present disclosure, there is provided an AP device, comprising: one or more processors; a memory coupled to at least one of the processors; and a set of computer program instructions stored in the memory, which, when executed by at least one of the processors, perform actions of: obtaining a previous scheduled time of each of a plurality of client devices at which each client device was scheduled by the AP during a respective previous scheduling cycle; determining, for each of the plurality of client devices, a scheduling weight of the client device based on a time interval from the previous scheduled time of the client device to a current scheduling cycle; and scheduling a wireless transmission to at least one of the plurality of client devices for the current scheduling cycle based on the scheduling weights.

According to yet another embodiment of the present disclosure, there is provided a computer program product for scheduling wireless transmissions, comprising a non-transitory computer readable storage medium having program instructions embodied therewith, the program instructions executable by a processor of an AP to cause the processor to: obtain a previous scheduled time of each of a plurality of client devices at which each client device was scheduled by the AP during a respective previous scheduling cycle; determine, for each of the plurality of client devices, a scheduling weight of the client device based on a time interval from the previous scheduled time of the client device to a current scheduling cycle; and schedule a wireless transmission to at least one of the plurality of client devices for the current scheduling cycle based on the scheduling weights.

According to still another embodiment of the present disclosure, there is provided a wireless communication system comprising at least an AP device and a plurality of client devices. The AP device is configured to perform actions of: obtaining a previous scheduled time of each of a plurality of client devices at which each client device was scheduled by the AP during a respective previous scheduling cycle; determining, for each of the plurality of client devices, a scheduling weight of the client device based on a time interval from the previous scheduled time of the client device to a current scheduling cycle; and scheduling a wireless transmission to at least one of the plurality of client devices for the current scheduling cycle based on the scheduling weights. Each of the plurality of client devices is configured to perform an action of: receiving a wireless transmission scheduled to the client device from the AP device for one or more scheduling cycles.

According to a further embodiment of the present disclosure, the action of scheduling a wireless transmission to at least one of the plurality of client devices for the current scheduling cycle based on the scheduling weights comprises: scheduling the wireless transmission to a first client device whose scheduling weight ranks first among the plurality of client devices for the current scheduling cycle.

According to a further embodiment of the present disclosure, there is provided an action of updating the previous scheduled time of the first client device based on the scheduled wireless transmission.

According to a further embodiment of the present disclosure, each of the plurality of client devices operates in a single-user (SU) transmission mode or a multi-user (MU) transmission mode.

According to a further embodiment of the present disclosure, the MU transmission mode comprises: a MU multiple-input/multiple-output (MIMO) transmission mode; or an orthogonal frequency division multiple access (OFDMA) transmission mode.

According to a further embodiment of the present disclosure, the scheduling weight of each of the plurality of client devices is further determined based on a bandwidth ratio or a spatial stream ratio of the client devices during the respective previous scheduling cycle.

According to a further embodiment of the present disclosure, the action of scheduling a wireless transmission to at least one of the plurality of client devices for the current scheduling cycle based on the scheduling weights comprises: determining a first client device whose scheduling weight ranks first among the plurality of client devices for the current scheduling cycle; and in response to the first client device operating in the SU transmission mode, scheduling the wireless transmission to the first client device.

According to a further embodiment of the present disclosure, the action of scheduling a wireless transmission to at least one of the plurality of client devices for the current scheduling cycle based on the scheduling weights comprises: determining a first client device whose scheduling weight ranks first among the plurality of client devices for the current scheduling cycle; in response to the first client device operating in the MU transmission mode, determining at least one second client device operating in a same MU transmission mode as the first client device; and scheduling the wireless transmission to the first client device and the at least one second client device based on the same MU transmission mode.

According to a further embodiment of the present disclosure, there is provided an action of: in response to the MU transmission mode being the OFDMA transmission mode, updating the bandwidth ratios and the previous scheduled times of the first client device and the at least one second client device.

According to a further embodiment of the present disclosure, there is provided an action of: in response to the MU transmission mode being the MU MIMO transmission mode, updating the spatial stream ratios and the previous scheduled times of the first client device and the at least one second client device.

According to a further embodiment of the present disclosure, the scheduling weight of each of the plurality of client devices is further determined based on a priority level of the client device.

According to a further embodiment of the present disclosure, the priority level of each of the plurality of client devices is determined based on a traffic type for the client device.

According to a further embodiment of the present disclosure, the priority level of each of the plurality of client devices is determined based on a device type of the client device.

According to a further embodiment of the present disclosure, the priority level of each of the plurality of client devices is determined based on a user-designated priority level.

At least based on the above embodiments of the present disclosure, an enhanced scheduling mechanism for scheduling wireless transmissions from AP to client devices can be realized, which ensures high overall network throughput while maintaining fairness among various client devices, thereby providing the best possible experience for all client devices.

## BRIEF DESCRIPTION OF THE DRAWINGS

The above and other objects, features and advantages of the present disclosure will become more apparent by describing embodiments of the present disclosure in more detail in conjunction with accompanying drawings. The drawings are used to provide a further understanding of the embodiments of the present disclosure and constitute a part of the specification. The drawings together with the embodiments of the present disclosure are used to explain the present disclosure, but do not constitute a limitation on the present disclosure. In the drawings, unless otherwise explicitly indicated, the same reference numerals refer to the same components, steps or elements.

Fig. 1A shows an exemplary network topology for data transmission between wireless communication devices according to an embodiment of the present disclosure.

Fig. 1B shows an exemplary schematic diagram illustrating the scheduling of wireless transmissions to one or more client device(s) by an AP in a WLAN network.

Fig. 2 shows an exemplary flowchart of a computer-implemented method of scheduling wireless transmissions according to an embodiment of the present disclosure.

Fig. 3 shows an exemplary schematic diagram of scheduling wireless transmissions according to an embodiment of the present disclosure.

Fig. 4 shows an exemplary flowchart of scheduling wireless transmissions in a scheduling cycle according to an embodiment of the present disclosure.

Fig. 5 shows an exemplary schematic diagram of scheduling wireless transmissions according to an embodiment of the present disclosure.

Fig. 6 shows an exemplary flowchart of scheduling wireless transmissions in a scheduling cycle according to an embodiment of the present disclosure.

Fig. 7 shows an exemplary result of scheduling wireless transmissions according to an embodiment of the present disclosure.

Fig. 8 is an exemplary block diagram illustrating a computing device according to embodiments of the disclosure.

## DETAILED DESCRIPTION

The technical solution of the present disclosure will be clearly and completely described below in conjunction with accompanying drawings. Obviously, the described embodiments are part of embodiments of the present disclosure, but not all of them. Based on the embodiments in the present disclosure, all other embodiments obtained by ordinary skilled in the art without making any creative efforts fall within the scope of protection of the present disclosure.

In the description of the present disclosure, it should be noted that orientations or positional relationships indicated by terms such as "center", "upper", "lower", "left", "right", "vertical", "horizontal", "inside" and "outside" are based on orientations or positional relationships shown in the drawings, only for the convenience of describing the present disclosure and simplifying the description, instead of indicating or implying the indicated device or element must have a particular orientation. In addition, terms such as "first", "second" and "third" are only for descriptive purposes, and cannot be understood as indicating or implying relative importance. Likewise, words like "a", "an" or "the" do not represent a quantity limit, but represent an existence of at least one. Words like "include" or "comprise" mean that an element or an object in front of the said word encompasses those ones listed following the said word and their equivalents, without excluding other elements or objects. Words like "connect" or "link" are not limited to physical or mechanical connections, but may include electrical connections, whether direct or indirect.

In the description of the present disclosure, it should be noted that, unless otherwise explicitly specified and limited, terms such as "mount", "link" and "connect" should be understood in a broad sense. For example, such terms may refer to being fixedly connected, or detachably connected, or integrally connected; may refer to being mechanically connected, or electrically connected; may refer to being directly connected, or indirectly connected via an intermediate medium, or internally connected inside two elements. For ordinary skilled in the art, the meanings of the above terms in the present disclosure may be understood on a case-by-case basis.

In addition, technical features involved in different embodiments of the present disclosure described below may be combined with each other as long as no conflicts occurs therebetween.

In the present disclosure, an AP, which may be interchangeably referred to as a wireless access point (WAP), is a communication device that can communicate with a non-AP (e.g., a station (STA) or client device) in a WLAN and that allows the non-AP to connect to a wired network. The AP usually connects to a router (via a wired network) as a standalone device, but it can also be integrated with or employed in the router. Likewise, in the present disclosure, a non-AP (e.g., a client device or station, which is interchangeably referred to as a STA) is a communication device that can communicate with an AP to obtain various communication services such as voice, video, packet data, messaging, broadcast, etc. The STA can be any device that contains an IEEE 820.11-conformant media access control (MAC) and physical layer (PHY) interface to the wireless medium (WM). For example, a STA may be a laptop, a desktop personal computer (PC), a personal digital assistant (PDA), an access point or a Wi-Fi phone in a WLAN environment. The STA may be fixed or mobile. In the WLAN environment, the terms "STA", "client device", "wireless client", "user" and "user device" are often used interchangeably.

In the present disclosure, a STA in a WLAN may work as an AP at a different occasion, and vice versa. This is because communication devices in the context of IEEE 820.11 (Wi-Fi) technologies may include both STA hardware components and AP hardware components. In this manner, the communication devices may switch between a STA mode and an AP mode, based on actual WLAN conditions and/or requirements. In various embodiments below, a non-AP STA may refer to a STA in a WLAN that is not implemented as an AP.

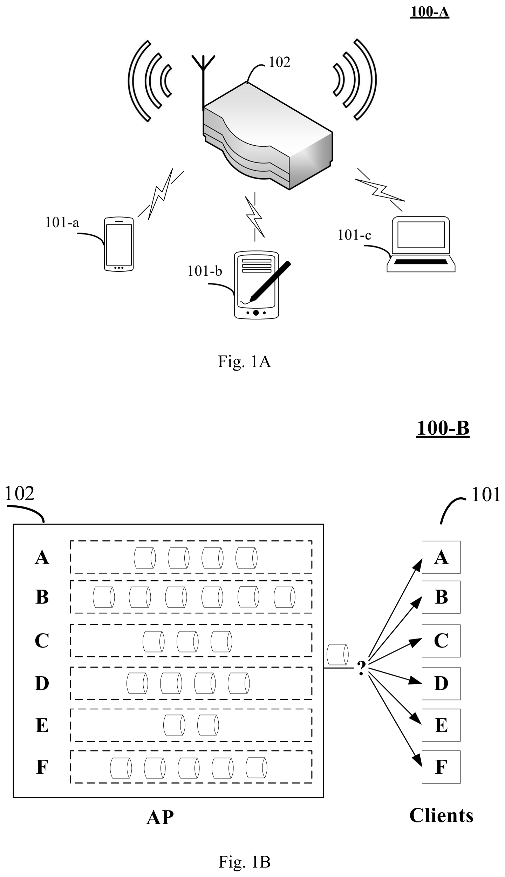

Fig. 1A shows an exemplary network topology for data transmission between wireless communication devices according to an embodiment of the present disclosure.

As shown in Fig. 1A, the exemplary network topology 100-A is depicted, which includes three client devices 101-a, 101-b, and 101-c (collectively referred to as a client device 101 hereinafter) connected to an access point (AP) 102, and can be employed in 802.11 WLAN networks. Examples of the client devices 101 may include, for example, smartphones, tablets, computers, and other internet-capable devices. As previously discussed, the AP 102 can establish WLAN communication with the client devices 101, enabling the client devices to connect to a wired network. This permits the client devices to access a variety of communication services from the Internet, including voice, video, packet data, messaging, and broadcast, among others. After the client devices 101 successfully associate with the AP 102 through the IEEE 802.11 association procedure, data transfer between the client devices 101 and the AP 102 can commence. This allows the client devices 101 to transmit and receive data packets to and from the network through the AP 102.

The architecture presented in Fig. 1A is only illustrative and does not impose any limitations on any embodiment of the present disclosure. Multiple APs in the WLAN network can serve specific sets of associated client devices, and depending on application requirements and overall network constraints, the number of client devices in each serving set can be greater or less than the three client devices as depicted.

Fig. 1B shows an exemplary schematic diagram illustrating the scheduling of wireless transmissions to one or more client device(s) by an AP in a WLAN network.

As shown in Fig. 1B, in the WLAN network 100-B, the AP has data (e.g., data packets) queued in its storage and available for transmission to multiple client devices (e.g., denoted as Clients A through F in Fig. 1B). It should be noted that the AP of Fig. 1B may correspond to the AP 102 of Fig. 1A, and the Clients A through F of Fig. 1B may correspond to the client devices 101 of Fig. 1A, and details of the devices are omitted. In the multi-client environment where the AP provides Internet access to multiple different client devices, balancing the load or resource allocation among these client devices to ensure a good network experience for all client devices is one of the critical considerations in the scheduling process.

For instance, in the WLAN network 100-B, Clients A through F may be engaged in various activities such as video streaming, voice calls, and web browsing and the like, according to the manipulations of respective users on the client devices. The traffic data intended for transmission to each user (or equivalently, each client device), represented in a form of data packets, arrives at the AP and is stored in respective queues associated with each client (as depicted by the dashed boxes at the AP in Fig. 1B, indicating varying amounts of packets available for transmission to different clients). Consequently, the AP buffers a variety of traffic data intended for each client and is responsible for continuously conducting multiple rounds or cycles of scheduling of downlink transmissions to one or more client(s) in the multi-client environment. The challenge lies in determining which client(s) should be the recipient of the corresponding traffic data in each round of scheduling, and how to make the scheduling decision in the multi-client environment. In this context, how to properly scheduling the order of data transmission to different clients in each scheduling cycle becomes the crux of traffic scheduling in the multi-client environment.

Although existing Quality of Service (QoS) mechanisms implement priority scheduling, they are not suitable for scenarios where the traffic of different clients is at the same priority level. The QoS scheduling mechanism is based on the identification of traffic types rather than conducted from the perspective of the scheduling order of different clients at the granularity of per-client basis in each scheduling cycle, thus limiting their applicability.

Some existing scheduling algorithms consider the cumulative transmission time for data transmissions to various clients over a predefined period of time (e.g., several seconds, such as 1s) and prioritize the client with the shortest cumulative transmission time for scheduling wireless transmission to the client. However, relying on the cumulative transmission time as an indicator of scheduling priority decision in a coarse scheduling granularity may potentially lead to the same client being prioritized repeatedly for successive scheduling cycles, since the cumulative transmission time is updated until the predefined period of time elapses, which may not timely reflect which is the proper recipient of the scheduled transmission from the perspective of fairness among clients. Additionally, some scheduling algorithms consider the amount of pending data for transmission as a scheduling metric. While such algorithms ensure a good Internet experience for clients with the most data to transmit, they are less favorable for clients with small data traffic.

At least in view of the above problems, traffic scheduling algorithms for downlink transmission to different clients significantly impact the user experience among different clients. A good traffic scheduling algorithm should ensure high overall network throughput while maintaining fairness among various clients, to provide best possible experience for all clients in WLAN networks. This can be achieved by effectively managing the order in which data packets are sent to different clients to ensure a balanced and fair distribution of network resources in a multi-user environment.

Considering the afore-mentioned problems, the present disclosure proposes a simple scheme of scheduling wireless transmission for each scheduling cycle based on a previous scheduled time of each client device at a fine-grained scheduling granularity. Compared to the existing scheduling algorithms, which conducts the scheduling based on cumulative transmission time and/or amount of pending data for transmission, the present disclosure ensures the fairness among client devices at a fine-grained scheduling granularity.

It should be noted that the scheduling cycle(s) is also interchangeably referred to as scheduling round(s), or scheduling iteration(s) throughout the present disclosure.

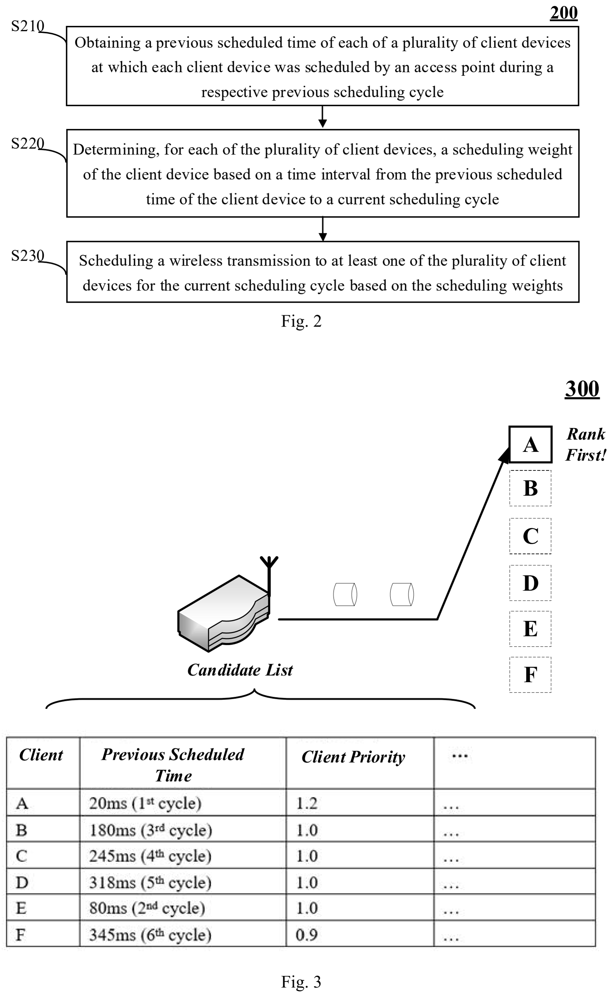

Fig. 2 shows an exemplary flowchart of a computer-implemented method of scheduling wireless transmissions according to an embodiment of the present disclosure.

The method 200 as described in Fig. 2 may be implemented in a computing device (such as the AP device as shown in Figs. 1A and 1B), and the detailed description of method 200 can refer to the content described in the above and throughout the specification. For example, method 200 can be executed in the architecture described with respect to Figs. 1A and 1B and according to the operations involved between the AP and the client devices connected thereto during the scheduling of wireless transmissions. In addition, each step of method 200 can be performed by one or more processing units, such as central processing unit (CPU) of the AP device as shown in Figs. 1A and 1B.

With reference to Fig. 2, method 200 comprises steps S210-S230.

At step S210, the computing device (e.g., the AP device) can obtain a previous scheduled time of each of a plurality of client devices at which each client device was scheduled by the AP during a respective previous scheduling cycle. For example, as mentioned above, the AP device is responsible for continuously conducting multiple successive rounds or cycles of scheduling of downlink transmissions, and in each scheduling cycle, the wireless transmission is scheduled to one or more client(s). According, information about the previous scheduled time of each client device can be maintained at the AP device (such as in a form of list or table among other examples) for subsequent calculation of the scheduling weight for each client device in the current scheduling cycle, as described later.

It should be noted that the previous scheduled time of each client device may be a time point at which the scheduling decision was made for the client device, or a specific point in time after a certain duration from the scheduling decision time, or the time at which the downlink transmission intended for the client device starts, or a specific point in time after a certain duration from the starting point of the downlink transmission, among other examples, as long as the previous scheduled time may reflect the time point at which the client device recently obtains a transmission opportunity and thus may be used as a metric for determining the client device is a proper scheduled object to ensure fairness among the client devices.

At step S220, the computing device (e.g., the AP device) can determine, for each of the plurality of client devices, a scheduling weight of the client device based on a time interval from the previous scheduled time of the client device to a current scheduling cycle. For example, the time interval can be determined, for each client device for which there is traffic available for transmission from the AP device thereto, based on a time difference between the previous scheduled time of the client device in the respective previous scheduling cycle and a particular point of time (e.g., a starting time point, or a specific point in time after a certain duration from the starting time point) of the current scheduling cycle. Accordingly, the scheduling weight of each client device can be determined for each scheduling cycle at a fine-grained granularity and can effectively indicate how long each client device has not obtained a transmission opportunity for downlink transmission.

At step S230, the computing device (e.g., the AP device) can schedule a wireless transmission to at least one of the plurality of client devices for the current scheduling cycle based on the scheduling weights. For example, the AP device may rank the scheduling weights of the plurality of client devices, and determine which client device(s) should be the recipient of the current scheduling cycle based on the ranking.

According to a first example of the embodiment, the wireless transmission can be schedule to a first client device whose scheduling weight ranks first among the plurality of client devices for the current scheduling cycle. In this case, the previous scheduled time of the at least one client device can be updated to reflect the fact that the at least one client device obtains the transmission opportunity in the current scheduling cycle, such that the updated scheduled time of the at least one client device can be used in the next scheduling cycle, and the operations involved in the scheduling process can be repeated on a per-scheduling cycle basis for determine the scheduled object(s) for each scheduling cycle.

According to a second example of the embodiment, the wireless transmission can be scheduled further in view of the transmission mode of the client devices, which can include a single-user (SU) transmission mode or a multi-user (MU) transmission mode, and the MU transmission mode can comprise a MU multiple-input/multiple-output (MIMO) transmission mode or an orthogonal frequency division multiple access (OFDMA) transmission mode. In this case, the scheduling weight of each of the plurality of client devices can be further determined based on a bandwidth ratio or a spatial stream ratio of the client devices during the respective previous scheduling cycle, and the wireless transmission can be scheduled to a first client device whose scheduling weight ranks first among the plurality of client devices for the current scheduling cycle in response to the first client device operating in the SU transmission mode. Alternatively, in response to the first client device operating in the MU transmission mode, the wireless transmission can be scheduled to the first client device and at least one second client device operating in a same MU transmission mode (e.g., MU MIMO or OFDMA transmission mode) as the first client device.

In a first aspect of the second example, if the MU transmission mode is the OFDMA transmission mode, the bandwidth ratios and the previous scheduled times of the first client device and the at least one second client device can be updated, to reflect the fact that the first client device and the at least one second client device obtain the transmission opportunity in the current scheduling cycle and the transmission capability of the AP (i.e., bandwidth or frequency resources supported by the AP for downlink transmission) is shared among the client devices in the current scheduling cycle, such that the updated scheduled times and bandwidth ratios of the client devices can be used in the next scheduling cycle, and the operations involved in the scheduling process can be repeated on a per-scheduling cycle basis for determine the scheduled object(s) for each scheduling cycle.

In a second aspect of this example, if the MU transmission mode is the MU MIMO transmission mode, the spatial stream ratios and the previous scheduled times of the first client device and the at least one second client device can be updated, to reflect the fact that the first client device and the at least one second client device obtain the transmission opportunity in the current scheduling cycle and the transmission capability of the AP (i.e., a total number of spatial streams supported by the AP for downlink transmission) is shared among the client devices in the current scheduling cycle, such that the updated scheduled times and spatial stream ratios of the client devices can be used in the next scheduling cycle, and the operations involved in the scheduling process can be repeated on a per-scheduling cycle basis for determine the scheduled object(s) for each scheduling cycle.

According yet another example of the embodiment, the scheduling weight of each of the plurality of client devices is further determined based on a priority level of the client device, such that on the basis of the fairness among the plurality of client devices obtained based on the scheduling strategy according to the previous scheduled times of the client devices, a particular client device can be assigned its specific priority level, if necessary, such that the client device can get better on-line experience to satisfy its special requirements.

For example, the priority level of each of the plurality of client devices can be determined based on a traffic type for the client device, a device type of the client device, a user-designated priority level, among other examples, as described hereinafter.

Fig. 3 shows an exemplary schematic diagram of scheduling wireless transmissions according to an embodiment of the present disclosure.

As illustrated in the schematic diagram 300 of Fig. 3, the present disclosure enables a simple and rapid selection of client device(s) to which downlink traffic is transmitted in each scheduling cycle (i.e., on a per-scheduling cycle basis), based on a previous scheduled time (or equivalently, a last scheduled time) for each client device in its respective previous scheduling cycle and the current time point in the current scheduling cycle, achieving a fine-grained and fair scheduling in the multi-user environment. The following description will detail the scheduling approach in conjunction with Fig. 3.

It should be noted that the scheduling approach in Fig. 3 can be conducted without considering the transmission mode of the client devices in the multi-user environment, and in each given scheduling cycle, only one client device is scheduled for downlink transmission.

As shown in Fig. 3, the AP can establish and maintain a list of different client devices for scheduling decision in the multi-user environment. For example, when the AP has data available for transmission to different client devices, it can add the different client devices as distinct nodes to a candidate list (which can be in a form of an array, linked list, queue, tree, or other data structures). This candidate list can maintain basic information for each client device, such as client name or identifier (such as Client A through F), transmission capability (e.g., negotiated rate, RSSI among other parameters), which is not shown in the list of Fig. 3 for brevity. Additionally, the candidate list can maintain the information needed for scheduling decisions to be made by the AP device, such as the previous scheduled time, as described above and hereinafter, for subsequent scheduling weight calculation and ranking based on the weights, which ensures fairness among users in the multi-user environment. Optionally, the candidate list can also maintain information on the priority level for each client device to accommodate specific priority requirements for different client devices. The two types of information are illustrated in the columns of "Previous Scheduled Time" and "Client Priority" of the table for Clients A through F in Fig. 3. In addition, the candidate list can also maintain the amount of data already transmitted and the amount of data pending for transmission to each client device, although this information may not be used for scheduling decisions.

For instance, the table of Fig. 3 shows that Client A was previously scheduled in Cycle 1 at a time point of 20 ms (e.g., relative to a certain anchor point as the zero point), with a client priority of 1.2. In addition, Client B was previously scheduled in Cycle 3 at a time point of 180 ms (relative to the same zero point), with a default priority of 1.0. This information is recorded in the same way for other client devices, and details are omitted here.

Accordingly, by leveraging the timestamp of the previous scheduled instance (i.e., the previous scheduled time) for each client device, the time elapsed since their last scheduled transmissions can be determined and recorded, for example, by computing the difference (i.e., time interval) between the timestamp of the previous scheduled instance and the start time of the current scheduling cycle (for example, Cycle 7 in the case of Fig. 3). This time interval is then utilized to calculate the scheduling weight for each client device, which is subsequently used to prioritize data transmission during the current scheduling cycle.

For example, as shown in Fig. 3, based on the results of the scheduling weight calculation and ranking, Client A has the highest scheduling weight, and therefore, the AP schedules data transmission to it in the current scheduling cycle.

It is understood that for the initial scheduling cycles of the scheduling process, since most client devices have not yet been granted transmission opportunities, there may be instances where several client devices have the same highest scheduling weight. In such cases, any one of these client devices with the highest priority can be selected for scheduling.

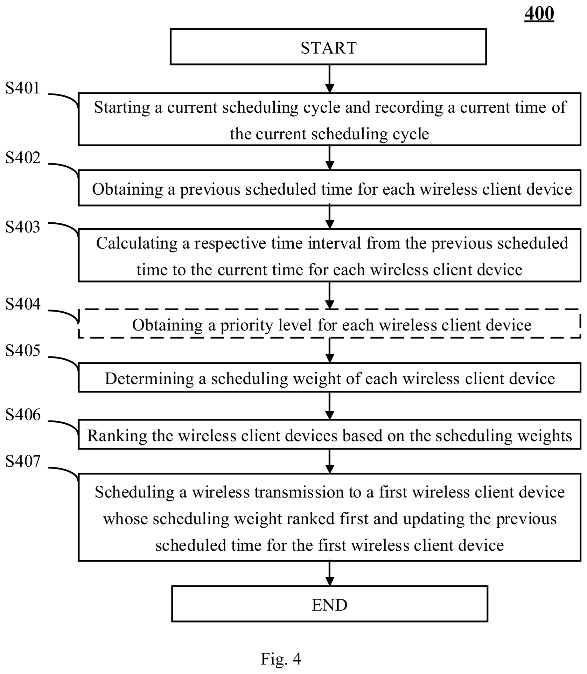

Fig. 4 shows an exemplary flowchart of scheduling wireless transmissions in a scheduling cycle according to an embodiment of the present disclosure.

The method 400 as described in Fig. 4 may be implemented in a computing device (such as the AP device as shown in Figs. 1A and 1B), and the detailed description of method 400 can refer to the content described in the above and throughout the specification. For example, method 400 can be executed in the architecture described with respect to Figs. 1A and 1B and according to the operations involved between the AP and the client devices connected thereto during the scheduling of wireless transmissions. In addition, each step of method 400 can be performed by one or more processing units, such as central processing unit (CPU) of the AP device as shown in Figs. 1A and 1B. It should be noted that method 400 is described from the perspective of a single scheduling cycle, and it can be iteratively repeated for each scheduling cycle, not shown for brevity. For example, method 400 is described hereinafter in conjunction with the schematic diagram 300 shown in Fig. 3.

It is understood that while Fig. 4 is described with numerous implementation details, it should be recognized that the wireless transmission scheduling technology of the present disclosure can be practiced without all of these details. These detailed descriptions should not be construed as limitations of the present disclosure.

With reference to Fig. 4, method 400 comprises steps S401-S407.

At step S401, the computing device (e.g., the AP device) can start a current scheduling cycle (such as scheduling cycle i) and record a current time of the current scheduling cycle, e.g., the start time of this scheduling cycle.

At step S402, the computing device (e.g., the AP device) can obtain a previous scheduled time for each wireless client device. For example, the previous scheduled time for each wireless client device can be retrieved from the candidate list described in Fig. 3.

At step S403, the computing device (e.g., the AP device) can calculate a respective time interval from the previous scheduled time to the current time for each wireless client device. In this step, the time interval can be calculated from the previous scheduled time of each client device to the start time of the current scheduling cycle. As an example, the time interval can be determined, for each client device in the candidate list, based on the information recorded in the candidate list, as follows:

$$\text{delay}_i = \text{current\_time} - \text{last\_sched\_time}_i \tag{1}$$

Here, "$\text{delay}_i$" represents the time elapsed since the client device was previous scheduled for client device i, "current_time" represents the start time of the current scheduling cycle, and "$\text{last\_sched\_time}_i$" represents the previous scheduled time of client device i. A large delay indicates that the client device has not been scheduled for a long time and thus should have a higher chance of being scheduled in this scheduling cycle, while a small delay indicates that the client device was recently scheduled and can have a lower chance of being scheduled in this scheduling cycle. Therefore, the parameter "delay" can be used as the primary parameter to measure the scheduling weight of obtaining transmission opportunity for each client device to ensure the fairness in multi-user environment.

At step S404, optionally, the computing device (e.g., the AP device) can obtain a priority level for each wireless client device, and the priority level on a per-client device basis can be considered in the scheduling decision. For example, in this step, it is determined if any client device has a specific priority that needs to be considered in the scheduling process. By adjusting the priority level (or equivalently, an additional weight coefficient) for a specific client device, the scheduling priority for each client device can be flexibly adjusted to satisfy the special requirement for each client device. By adding the additional weight coefficient for specific client devices (which can be identified by MAC addresses, traffic types, etc.), the transmission priority of specific client devices can be effectively managed.

In a first example, the priority level of each of the plurality of client devices can be determined based on the traffic type for the client device. For instance, if the first client device is engaged in traffic that requires a higher scheduling priority, such as voice calls, while the second client device is engaged in traffic that does not require as high a scheduling priority, such as web browsing, then the first client device can be given a weight boost, for example, from a default priority level of 1.0 to 1.2; whereas the priority level of the second client device can be reduced to 0.8, while other client devices remain unchanged.

In a second example, the priority level of each of the plurality of client devices can be determined based on the device type of the client device. For example, if the first client device is a smartphone, which is a client device type that requires ensuring a good user experience, and the second client device is an IoT device such as a surveillance camera, then the first client device can be given a weight boost, while the second client device can have a weight reduction, and other client devices can remain unchanged, similar to the above.

In a third example, the priority level of each of the plurality of client devices can be determined based on a user-designated priority level. For example, if the first client device is used by a home user in the WLAN environment, and the second client device is used by a guest user in the WLAN environment, different priority levels can be assigned to ensure the best user experience for the home users by designating different priority levels specific to the home user and the guest user, to adjust the scheduling weights thereof.

It should be noted that the priority levels of the client devices can be automatically determined by the AP (for example, the AP can identify the type of traffic each client device is conducting and assign the priority level accordingly) or can be input by the user (for example, the user can input the values of the priority levels on a management interface (e.g., a GUI) of the AP device. Regardless of which approach to use to determine the priority level, optionally, the additional priority information for each client device can be superimposed on the basis of the calculated delay, thereby making a comprehensive scheduling decision.

At step S405, the computing device (e.g., the AP device) can determine a scheduling weight of each wireless client device. For example, if priority level for each wireless client device is considered, the scheduling weight can be determined as follows:

$$\text{weight}_i = k_{ni} * (\text{delay}_i) \tag{2}$$

Here, "weight$_i$" represents the scheduling weight of client device i, "$k_{ni}$" represents the priority level of client device i, and "delay$_i$" is obtained through Equation (1). It should be noted that by default, e.g., when the"$k_{ni}$" is omitted in Equation (2), different client devices may have the same priority level value, such as 1.0, which can realize a fair scheduling among client devices, as described above. Nevertheless, optionally, to increase or decrease the transmission priority of certain client devices, the value of "$k_{ni}$" can be appropriately increased or decreased, thereby changing the scheduling weight of the corresponding client device. Increasing "$k_{ni}$" raises the priority of the corresponding client device, while decreasing "$k_{ni}$" lowers the priority of the corresponding client device.

At step S406, the computing device (e.g., the AP device) can rank the wireless client devices based on the scheduling weights. For example, the client devices can be ranked based on their scheduling weights, with client device having the highest weight given the transmission opportunity in this scheduling cycle. In this step, various ranking algorithms can be employed by the AP device, such as heap sort, quick sort, merge sort, selection sort, bubble sort, insertion sort, bucket sort, etc.

At step S407, the computing device (e.g., the AP device) can scheduling a wireless transmission to a first client device whose scheduling weight ranked first, and update the previous scheduled time for the first client device. In this case, the previous scheduled time of the first client device can be updated, to reflect the fact that the first client device obtains the transmission opportunity in the current scheduling cycle, such that the updated scheduled time thereof can be used in the next scheduling cycle, and the operations involved in the scheduling process can be repeated on a per-scheduling cycle basis for determine the scheduled object(s) for each scheduling cycle.

According to the embodiment of the present disclosure, a rapid and fair scheduling can be achieved by simply recording the previous scheduled times of client devices and calculating the respective time intervals relative to the current time in the current scheduling cycle, without complex calculations on excessive parameters. This approach allows for the rapid selection of client devices to which data traffic is transmitted on a per-scheduling cycle basis and based on the above-mentioned parameters, enabling fine-grained fair scheduling compared to existing scheduling algorithms.

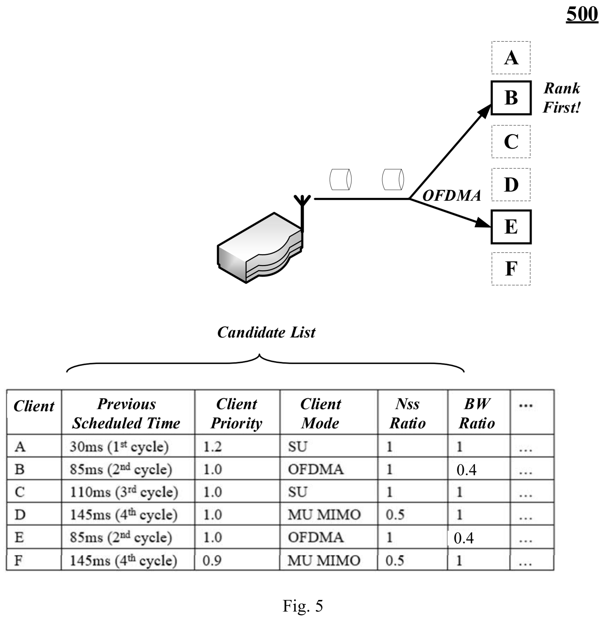

Fig. 5 shows an exemplary schematic diagram of scheduling wireless transmissions according to an embodiment of the present disclosure.

As illustrated in the schematic diagram 500 of Fig. 5, the present disclosure enables a simple and rapid selection of client device(s) to which downlink traffic is transmitted in each scheduling cycle (i.e., on a per-scheduling cycle basis), based on a previous scheduled time (or equivalently, a last scheduled time) for each client device in its respective previous scheduling cycle and the current time point in the current scheduling cycle, and further in view of the transmission mode of the client devices, which achieves a fine-grained and fair scheduling in the multi-user environment while ensuring the fairness between SU transmission mode and MU transmission mode for the client devices. The following description will detail the scheduling approach in conjunction with Fig. 5.

It should be noted that the scheduling approach in Fig. 5 can be conducted by considering the transmission mode of the client devices in the multi-user environment. In this embodiment, the schematic diagram 500 in Fig. 5 is basically the same as the schematic diagram 300 in Fig. 3, and details for the same elements are omitted here. The distinctions lie in the further considerations of the transmission mode of the client devices. The following will provide a detailed description in conjunction with Fig. 5.

As shown in Fig. 5, when the AP transmits data traffic to client devices, it can not only take the one-to-one form (i.e., downlink transmission from one AP to one STA), but also the one-to-multiple form (i.e., simultaneous downlink transmission from one AP to multiple STAs), such as using MU-MIMO and OFDMA. Therefore, fairness among users in different transmission modes is also considered in the scheduling decision during the scheduling process. Accordingly, the candidate list maintained at the AP for different client devices can also record a portion or ratio of the full transmission capability of the AP device (i.e., the full transmission resources supported by the AP device in its downlink transmission) apportioned to each client device during a respective previous scheduling cycle, for example, the spatial stream ratio for a client device if it worked in the MU-MIMO mode in its most recent scheduling cycle, or the bandwidth ratio for a client device if it worked in the OFDMA mode in its most recent scheduling cycle, such that the parameters regarding the share of the full AP capability among different client devices can be used for subsequent scheduling weight calculation and ranking, ensuring fairness among different client devices and different transmission modes.

For example, the candidate list of Fig. 5 shows that Client A was previously scheduled in Cycle 1 at a time point of 30 ms (e.g., relative to a certain time point as the zero point), with a client priority of 1.2. Clients B and E were previously scheduled in Cycle 2 at a time point of 85 ms (relative to the same zero point), with a default priority of 1.0, and the simultaneous downlink transmission were transmitted via OFDMA from the AP device to Clients B and E in Cycle 2.

It should be noted that OFDMA, as a multi-user technology and a key feature of Wi-Fi 6, allows an AP to synchronize communication with multiple individual client devices assigned to specific resource units (RUs). By subdividing the channel, small frames can be simultaneously transmitted to multiple users in parallel. For example, if an OFDMA channel consists of a total of 256 subcarriers (tones) and corresponds to a 20 MHz channel, these tones can be grouped into smaller subchannels known as RUs, and the AP device can designate 26, 52, 106, and 242 subcarrier RUs, which equates roughly to 2 MHz, 4 MHz, 8 MHz, and 20 MHz channels. Accordingly, the AP dictates how many RUs are used within a 20 MHz channel, and different combinations of RUs can be used. The AP may allocate the whole channel to only one client at a time or partition the channel to serve multiple clients simultaneously. It should be noted that the 20 MHz channel is only used as an example, actually, OFDMA channel with different bandwidths can be similarly divided to RUs.

In the case of Clients B and E, if they were scheduled in Cycle 2 and each was allocated a 106-tone RU on a 20 MHz channel (which corresponds a total of 256 subcarriers) for the downlink transmission, the spatial stream ratio would be about 0.4 for each of Clients B and E in Cycle 2, as shown in Fig. 5 for the column of BW Ratio in the candidate list.

Further as shown in Fig. 5, Client C was previously scheduled in Cycle 3 at a time point of 110 ms (relative to the zero point), with a priority of 1.0. In addition, Clients D and F were previously scheduled in Cycle 4 at a time point of 145 ms (relative to the same zero point), with a default priority of 1.0, and simultaneous downlink transmission were transmitted via MU-MIMO from the AP device to Clients D and F in Cycle 4.

It should be noted that much like OFDMA, MU-MIMO allows for multiple user communications downlink from an AP to multiple clients. However, instead of partitioning the frequency space, MU-MIMO takes advantage of the fact that APs have multiple radios and antennas (which correspond to multiple spatial streams supported by the AP for downlink transmission). A MU-MIMO AP transmits unique modulated data streams to multiple clients simultaneously, aiming to improve efficiency by using less airtime. For example, when a MU-MIMO-capable AP operates using 4 spatial streams or 4 transmitters (TX), the four unique spatial streams can be destined for four independent MU-MIMO-capable clients, each client being assigned with a distinct spatial stream. In another case, the four unique spatial streams can be destined for two independent MU-MIMO-capable clients, each client being assigned with two spatial streams. It should be noted that the number of spatial streams supported by the AP device and the number of spatial streams shared by each client device are only provided as examples, the present disclosure does not limit thereto.

In the case of Clients D and F, if they were scheduled in Cycle 4 and each was allocated two spatial streams out of a total of four spatial streams supported by the AP device for the downlink transmission, the spatial stream ratio would be 0.5 for each of Clients D and F in Cycle 4, as shown in Fig. 5 for the column of Nss Ratio in the candidate list.

It is understood that for the $N_{SS}$ Ratio (Number of Spatial Streams) column of the candidate list, due to the SU transmission mode and OFDMA transmission mode do not involve sharing of spatial streams, client devices operating in these modes during respective previous scheduling cycles do not share the total spatial stream capacity of the AP device. Therefore, the NSS ratio remains the default value of 1.0. Similarly, for the BW (Bandwidth) ratio column, due to the SU transmission mode and MU-MIMO transmission mode do not involve sharing of frequency bandwidth, client devices operating in these modes during respective previous scheduling cycles do not share the bandwidth capacity of the AP device. Therefore, the BW ratio remains the default value of 1.0.

Accordingly, by leveraging the timestamp of the previous scheduled instance (i.e., the previous scheduled time) for each client device, the time elapsed since their last scheduled transmissions can be determined and recorded, for example, by computing the difference (i.e., time interval) between the timestamp of the previous scheduled instance and the start time of the current scheduling cycle (for example, Cycle 5 in the case of Fig. 5). Additionally, the spatial stream ratio or bandwidth ratio in the previous scheduling cycle for each client device can be considered to calculate the scheduling weight of each client device, which ensures fairness among different client devices and different transmission modes.

For example, as shown in Fig. 5, based on the results of the scheduling weight calculation and ranking, Client B has the highest scheduling weight, and it is further determined that a simultaneous downlink transmission from the AP device to Clients B and E is possible via OFDMA. In this case, the AP schedules data transmission to Clients B and E in the current scheduling cycle.

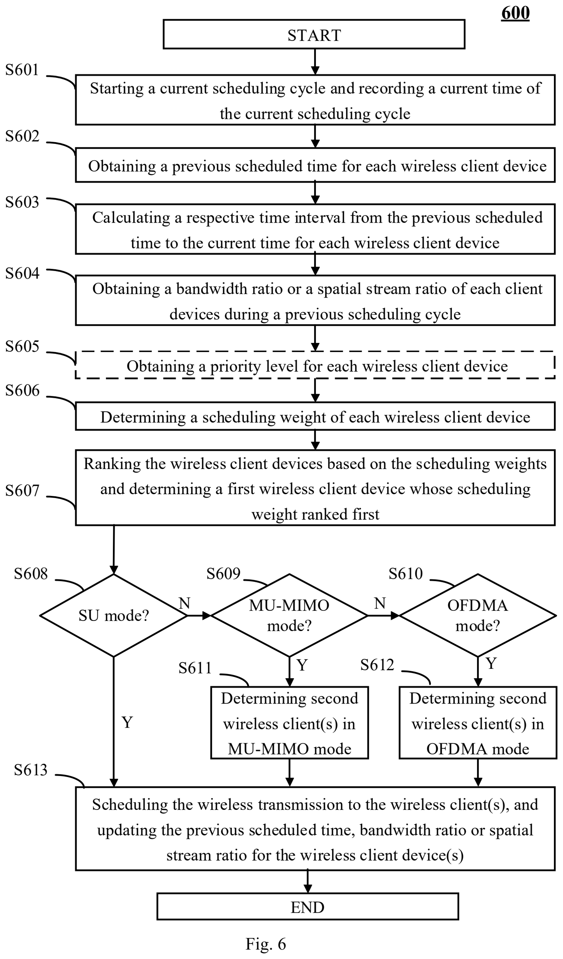

Fig. 6 shows an exemplary flowchart of scheduling wireless transmissions in a scheduling cycle according to an embodiment of the present disclosure.

The method 600 as described in Fig. 6 may be implemented in a computing device (such as the AP device as shown in Figs. 1A and 1B), and the detailed description of method 600 can refer to the content described in the above and throughout the specification. For example, method 600 can be executed in the architecture described with respect to Figs. 1A and 1B and according to the operations involved between the AP and the client devices connected thereto during the scheduling of wireless transmissions. In addition, each step of method 600 can be performed by one or more processing units, such as central processing unit (CPU) of the AP device as shown in Figs. 1A and 1B. It should be noted that method 600 is described from the perspective of a single scheduling cycle, and it can be iteratively repeated for each scheduling cycle, not shown for brevity. For example, method 600 is described hereinafter in conjunction with the schematic diagram 500 shown in Fig. 5.

It is understood that while Fig. 6 is described with numerous implementation details, it should be recognized that the wireless transmission scheduling technology of the present disclosure can be practiced without all of these details. These detailed descriptions should not be construed as limitations of the present disclosure.

With reference to Fig. 6, method 600 comprises steps S601-S613.

Steps S601-S603 of Fig. 6 are basically the same as steps S401-S403 of Fig. 4, so the operations involved in these steps are not repeated for brevity.

At step S604, the computing device (e.g., the AP device) can obtain a bandwidth ratio or a spatial stream ratio of each client device during a previous scheduling cycle. For example, the bandwidth ratio and spatial stream ratio of each client device can be retrieved from the candidate list described in Fig. 5.

As previously discussed, when the AP transmits data packets to client devices, it can take one-to-one form (such as SU mode) or one-to-multiple form (i.e., MU mode such as MU-MIMO and OFDMA). In the MU transmission modes, the AP transmits data to multiple client devices simultaneously, and the transmission capability of the AP device in the downlink direction is shared among the client devices involved in the simultaneous MU transmission, which may result in a reduction of the data amount transmitted to each client device compared to that of the SU transmission mode where the transmission capability of the AP device is exclusively used by the single client device and not shared by other client devices. Therefore, the bandwidth ratio and spatial stream ratio of each client device should be considered in the calculation of the scheduling weight thereof to ensure the fairness among transmission modes.

Step S605 of Fig. 6 is basically the same as step S404 of Fig. 4, so the operations involved in this steps are not repeated for brevity.

At step S606, the computing device (e.g., the AP device) can determine a scheduling weight of each wireless client device. For example, if priority level for each wireless client device is not considered, the scheduling weight can be determined as follows:

$$\text{weight}_i = \text{delay}_i \, / \, (\text{nss\_ratio}_i * \text{bw\_ratio}_i) \qquad\qquad (3)$$

Here, "$\text{weight}_i$" represents the scheduling weight of client device i, and "$\text{delay}_i$" is similarly obtained through Equation (1) described above.

Here, $\text{nss\_ratio}_i$ represents the spatial stream ratio of client device i during its previous scheduling cycle, and $\text{bw\_ratio}_i$ represents the bandwidth ratio of client device i during its previous scheduling cycle. It is noted that both spatial stream and bandwidth ratios have the default value of 1.0 for client devices in SU transmission mode, and the spatial stream ratio of client device i (if it operates in OFDMA transmission mode) and the bandwidth ratio of client device i (if it operates in MU MIMO transmission mode) have the default value of 1.0.

It should be noted that if a client device occupies a greater spatial stream proportion and/or a greater bandwidth proportion during its previous scheduling cycle, it means that the client device has obtained enough transmission capability of the AP device for receiving the data traffic intended thereto and has obtained sufficient amount of data traffic, and thus should have a smaller scheduling weight in the current scheduling cycle. On the other hand, if a client device occupies a lower spatial stream proportion and/or a lower bandwidth proportion during its previous scheduling cycle, it means that the client device has not obtained enough transmission capability of the AP device and has not obtained sufficient amount of data traffic, and thus should have a bigger scheduling weight in the current scheduling cycle. In this case, in order to maintain a fairness of transmission opportunity among different client devices, the transmission capability of the AP device that has been shared among the client devices working in different transmission modes should be considered in the current scheduling cycle.

As another example, if priority level for each wireless client device is considered, the scheduling weight can be determined by adjusting Equation (3) as follows:

$$\text{weight}_i = k_{ni} * \text{delay}_i \, / \, (\text{nss\_ratio}_i * \text{bw\_ratio}_i) \qquad\qquad (4)$$

Here, "$k_{ni}$" represents the priority level of client device i, which is similar to that is described in combination with Equation (2) above.

According to another example, the scheduling weight of each client device can be determined as follows:

$$weight_i = a * delay_i - b * nss_{ratio_i} - c * bw\_ratio_i \qquad (5)$$

Here, a, b and c represent coefficients, which can be determined based on the overall network environment and the transmission parameters of the devices. In addition, suitable values for these coefficients can also be determined by collecting historical data from the entire environment and deriving from the historical data, e.g., by using fitting algorithms, model training, and other proper approaches. The specific numerical values are not prescribed here and are not limited in the present disclosure.

At step S607, the computing device (e.g., the AP device) can rank the wireless client devices based on the scheduling weights, and determine a first client device whose scheduling weight ranked first. For example, the client devices can be ranked based on the similar approaches as described in step S406, such that the first client device whose scheduling weight ranks first can be determined based on the ranking.

At steps S608~S610, the computing device (e.g., the AP device) can determine the transmission mode of the first client device whose scheduling weight ranks first. For example, if the first client device works in SU transmission mode, method 600 proceeds to step S613. On the other hand, if the first client device works in MU transmission mode, method 600 proceeds to step S611 (in response to determining that the first client device works in MU MIMO transmission mode) or S612 (in response to determining that the first client device works in OFDMA transmission mode).

At steps S611, the computing device (e.g., the AP device) can determine one or more second wireless client(s) operating in MU-MIMO mode, which means that simultaneous downlink transmission to the first client device and the second wireless client(s) is possible via MU-MIMO in the current scheduling cycle. Next, method 600 proceeds to step S613.

At steps S612, the computing device (e.g., the AP device) can determine one or more second wireless client(s) operating in OFMMA mode, which means that simultaneous downlink transmission to the first client device and the second wireless client(s) is possible via OFMMA in the current scheduling cycle. Next, method 600 proceeds to step S613.

At steps S613, the computing device (e.g., the AP device) can schedule the wireless transmission to the determined wireless client(s) in the current scheduling cycle (e.g., SU transmission or MU transmission via OFDMA or MU MIMO). In brief, based on the ranking of the client devices and the judgment of the transmission modes of the client devices, the first client device with the highest scheduling weight is selected for scheduling, along with one or more second client device(s) (if any) that can participant in MU transmission together with the first client device. In addition, the computing device (e.g., the AP device) can selectively update the previous scheduled time, bandwidth ratio or spatial stream ratio for the wireless client device(s), which is described hereinafter.

In a first case, in response to the first client device operating in the SU transmission mode, the AP device can schedule the wireless transmission to only the first client device, and update the previous scheduled time of the first client device who has obtained the transmission opportunity in the current scheduling cycle for later use.

In a second case, in response to the first client device operating in the OFDMA transmission mode, the AP device can determine at least one second client device operating in a same MU transmission mode (i.e., OFDMA transmission mode) as the first client device, and schedule the wireless transmission to the first client device and the at least one second client device. Then, the AP device can update the bandwidth ratios and the previous scheduled times of the first client device and the at least one second client device who have obtained the transmission opportunity in the current scheduling cycle for later use.

In a third case, in response to the first client device operating in the MU MIMO transmission mode, the AP device can determine at least one second client device operating in a same MU transmission mode (i.e., MU MIMO transmission mode) as the first client device, and schedule the wireless transmission to the first client device and the at least one second client device. Then, the AP device can update the spatial stream ratios and the previous scheduled times of the first client device and the at least one second client device who have obtained the transmission opportunity in the current scheduling cycle for later use.

According to the embodiment of the present disclosure, a rapid and fair scheduling can be achieved by simply recording the previous scheduled times of client devices and calculating the respective time intervals relative to the current time in the current scheduling cycle, without complex calculations on excessive parameters. In addition, the impact of MU-MIMO and OFDMA transmission modes on scheduling decision is considered to ensure fairness between SU and MU transmission modes. This approach allows for the rapid selection of client devices to which data traffic is transmitted on a per-scheduling cycle basis and based on the above-mentioned parameters, enabling fine-grained fair scheduling among different client devices and among different transmission modes thereof.

To validate the results of the scheduling approach proposed in the present disclosure, the following testing was conducted. A multi-user environment was constructed where the AP device has pending packets available for transmission to two client devices, the first client is located near the AP (also referred to as the near-site client) and is engaged in high-traffic downloads, and the second client is located farther from the AP (also referred to as the far-site client) and is streaming 4K video, capped at a speed of 30 Mbps. Tests were conducted on the throughput of individual clients and the total throughput of two clients, using the scheduling approach of the present disclosure and the existing scheduling approach, as shown in Table 1.

| | Scheduling approach of the present disclosure | Existing scheduling approach |
|---|---|---|
| Throughput of Client 1 | 683.007 Mbps | 793.652 Mbps |
| Throughput of Client 2 | 27.72 Mbps | 9.4 Mbps |
| Total Throughput | 710.727 Mbps | 803.052 Mbps |

It can be seen that the proposed scheduling approach ensures the throughput of a far-site, low-traffic client even when the near-site client is engaged in high-traffic downloads, so as to obtain the fairness among different clients in a multi-client environment. For example, although the throughput of the first client has decreased, the second client with low-traffic transmission has been given a fair scheduling opportunity, preventing its internet experience from becoming too poor. According to the present disclosure, in the multi-user environments, each client is provided with a fair scheduling opportunity.

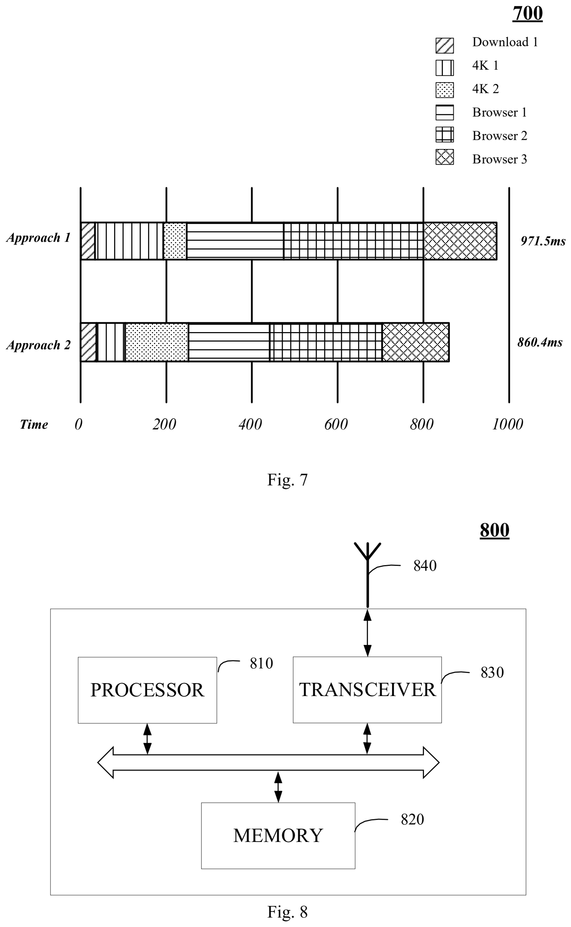

Fig. 7 shows an exemplary result of scheduling wireless transmissions according to an embodiment of the present disclosure.

Similar to the above, a multi-user environment was constructed where the AP device has pending packets available for transmission to six client devices, each of the client device may be engaged in respective one or more activities for obtaining Internet access, such as downloading, 4K video streaming, browsing and the like. Tests were conducted on the latency accumulation in the multi-client environment, which is calculated by summing the latency of each client device, wherein approach 1 corresponds existing scheduling approach while approach 2 corresponds the scheduling approach of the present disclosure. For example, the latency of each client device is determined based on a difference between the theoretical transmission time for the corresponding downlink traffic and the actual time taken to obtain the downlink traffic for the client device, which reflects the length of time spent waiting due to not being scheduled for transmission. From the results of the comparison of Fig. 7, it can be seen that, the latency accumulation in the multi-client environment has been reduced, thereby achieving fairness among clients during scheduling.

Fig. 8 is an exemplary block diagram illustrating a computing device according to embodiments of the disclosure.

It should be noted that the computing device depicted in Fig. 8 can correspond to one or more of the AP device and client devices as described in Figs. 1-7 and can be used to perform the actions involved in the wireless transmission scheduling, for example, the methods 200, 400 and 600 as described above.

As shown in Fig. 8, the computing device 800 can comprise processor 810, memory 820, transceiver 830 and at least one antenna 840. The processor 810 is communicatively coupled with the memory and the transceiver and configured to perform the methods discussed above, e.g., to schedule wireless transmissions by using the transceiver and the antenna under the control of the computer program instructions stored in the memory and loaded to the processor. According to embodiments of the present disclosure, the processor (such as a baseband processor) is configured to cause one or more operations of the methods discussed above to occur, e.g., to cause an apparatus (e.g., the AP device or client device as described above in Figs. 1-7) to perform operations or a method described above.

Examples of the processor 810 comprise microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure.

The processor 810 can execute software. Software shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise. The software may reside on memory 820.

The memory 820 may be a non-transitory computer-readable medium. A non-transitory computer-readable medium includes, by way of example, a magnetic storage device (e.g., hard disk, floppy disk, magnetic strip), an optical disk (e.g., a compact disc (CD) or a digital versatile disc (DVD)), a smart card, a flash memory device (e.g., a card, a stick, or a key drive), a random access memory (RAM), a read-only memory (ROM), a programmable ROM (PROM), an erasable PROM (EPROM), an electrically erasable PROM (EEPROM), a register, a removable disk, and any other suitable medium for storing software and/or instructions that may be accessed and read by a computer. The memory 820 may reside in the processor 810, external to the processor 810, or distributed across multiple entities including the processor 810. The memory 820 may be embodied in a computer program product. By way of example, a computer program product may include a computer-readable medium in packaging materials. Those skilled in the art will recognize how to implement the described functionality presented throughout this disclosure depending on the particular application and the overall design constraints imposed on the overall system.

The transceiver 830 may be a radio frequency (RF) transceiver and include an RF transmitter and an RF receiver (not shown). For example, the transceiver 830 can comprise separate transmitter and receiver or a single transceiver in which the transmitter and the receiver are integrated. The transmitter can transmit RF signals via at least one antenna 840 to one or more other computing devices, and can also receive RF signals via at least one antenna 840 from one or more other computing devices, to allow for communications with other devices.

In addition, according to another aspect of the present disclosure, a computer program product for scheduling wireless transmissions is disclosed. As an example, the computer program product comprises a non-transitory computer readable storage medium having program instructions embodied therewith, and the program instructions are executable by a processor. When executed, the program instructions cause the processor to perform one or more of the above described procedures, and details are omitted herein for conciseness.

The present disclosure may be a system, a method, and/or a computer program product at any possible technical detail level of integration. The computer program product may include a computer readable storage medium (or media) having computer readable program instructions thereon for causing a processor to carry out aspects of the present disclosure.

Expression such as "according to", "based on", "dependent on", and so on as used in the disclosure does not mean "according only to", "based only on", or "dependent only on", unless it is explicitly otherwise stated. In other words, such expression generally means "according at least to", "based at least on", or "dependent at least on" in the disclosure.

Any reference in the disclosure to an element using the designation "first", "second" and so forth is not intended to comprehensively limit the number or order of such elements. These expressions can be used in the disclosure as a convenient method for distinguishing two or more units. Thus, a reference to a first unit and a second unit does not imply that only two units can be employed or that the first unit must precede the second unit in some form.

The term "determining" used in the disclosure can include various operations. For example, regarding "determining", calculating, computing, processing, deriving, investigating, looking up (e.g., looking up in tables, databases, or other data structure), ascertaining, and so forth are regarded as "determination". In addition, regarding "determining", receiving (for example, receiving information), transmitting (for example, transmitting information), input, output, accessing (for example, access to data in the memory), and so forth, are also regarded as "determining". In addition, regarding "determining", resolving, selecting, choosing, establishing, comparing, and so forth can also be regarded as "determining". That is, regarding "determining", several actions can be regarded as "determining".

The terms such as "connected", "coupled" or any of their variants used in the disclosure refer to any connection or combination, direct or indirect, between two or more units, which can include the following situations: between two units that are "connected" or "coupled" with each other, there are one or more intermediate units. The coupling or connection between the units can be physical or logical, or can also be a combination of the two. As used in the disclosure, two units can be considered to be electrically connected through the use of one or more wires, cables, and/or printed, and as a number of non-limiting and non-exhaustive examples, and are "connected" or "coupled" with each other through the use of electromagnetic energy with wavelengths in a radio frequency region, the microwave region, and/or in the light (both visible and invisible) region, and so forth.

When used in the disclosure or the claims "including", "comprising", and variations thereof, these terms are as open-ended as the term "having". Further, the term "or" used in the disclosure or in the claims is not an exclusive-or.

The present disclosure has been described in detail above, but it is obvious to those skilled in the art that the present disclosure is not limited to the embodiments described in the disclosure. The present disclosure can be implemented as a modified and changed form without departing from the spirit and scope of the present disclosure defined by the description of the claims. Therefore, the description in the disclosure is for illustration and does not have any limiting meaning to the present disclosure.

**Claims**

1. A method for scheduling wireless transmissions, the method implemented in an access point (AP) device and comprising:

   obtaining a previous scheduled time of each of a plurality of client devices at which each client device was scheduled by the AP during a respective previous scheduling cycle;
   determining, for each of the plurality of client devices, a scheduling weight of the client device based on a time interval from the previous scheduled time of the client device to a current scheduling cycle; and
   scheduling a wireless transmission to at least one of the plurality of client devices for the current scheduling cycle based on the scheduling weights.

2. The method of claim 1, wherein scheduling a wireless transmission to at least one of the plurality of client devices for the current scheduling cycle based on the scheduling weights comprises:
scheduling the wireless transmission to a first client device whose scheduling weight ranks first among the plurality of client devices for the current scheduling cycle.

3. The method of claim 2, further comprising:
updating the previous scheduled time of the first client device based on the scheduled wireless transmission.

4. The method of claim 1, wherein each of the plurality of client devices operates in a single-user (SU) transmission mode or a multi-user (MU) transmission mode, and
wherein the MU transmission mode comprises:

a MU multiple-input/multiple-output (MIMO) transmission mode; or
an orthogonal frequency division multiple access (OFDMA) transmission mode.

5. The method of claim 4, wherein the scheduling weight of each of the plurality of client devices is further determined based on a bandwidth ratio or a spatial stream ratio of the client devices during the respective previous scheduling cycle.

6. The method of claim 5, wherein scheduling a wireless transmission to at least one of the plurality of client devices for the current scheduling cycle based on the scheduling weights comprises:

determining a first client device whose scheduling weight ranks first among the plurality of client devices for the current scheduling cycle; and
in response to the first client device operating in the SU transmission mode, scheduling the wireless transmission to the first client device.

7. The method of claim 5, wherein scheduling a wireless transmission to at least one of the plurality of client devices for the current scheduling cycle based on the scheduling weights comprises:

determining a first client device whose scheduling weight ranks first among the plurality of client devices for the current scheduling cycle;
in response to the first client device operating in the MU transmission mode, determining at least one second client device operating in a same MU transmission mode as the first client device; and
scheduling the wireless transmission to the first client device and the at least one second client device based on the same MU transmission mode.

8. The method of claim 7, further comprising:
in response to the MU transmission mode being the OFDMA transmission mode, updating the bandwidth ratios and the previous scheduled times of the first client device and the at least one second client device.

9. The method of claim 7, further comprising:
in response to the MU transmission mode being the MU MIMO transmission mode, updating the spatial stream ratios and the previous scheduled times of the first client device and the at least one second client device.

10. The method of claim 1, wherein the scheduling weight of each of the plurality of client devices is further determined based on a priority level of the client device.

11. The method of claim 10, wherein the priority level of each of the plurality of client devices is determined based on a traffic type for the client device.

12. The method of claim 10, wherein the priority level of each of the plurality of client devices is determined based on a device type of the client device.

13. The method of claim 10, wherein the priority level of each of the plurality of client devices is determined based on a user-designated priority level.

14. An access point (AP) device, comprising:

one or more processors;

a memory coupled to at least one of the processors; and

a set of computer program instructions stored in the memory, which, when executed by at least one of the processors, perform actions of:

obtaining a previous scheduled time of each of a plurality of client devices at which each client device was scheduled by the AP during a respective previous scheduling cycle;

determining, for each of the plurality of client devices, a scheduling weight of the client device based on a time interval from the previous scheduled time of the client device to a current scheduling cycle; and

scheduling a wireless transmission to at least one of the plurality of client devices for the current scheduling cycle based on the scheduling weights.

15. A computer program product for scheduling wireless transmissions, the computer program product comprising a non-transitory computer readable storage medium having program instructions embodied therewith, the program instructions executable by a processor of an access point (AP) to cause the processor to:

obtain a previous scheduled time of each of a plurality of client devices at which each client device was scheduled by the AP during a respective previous scheduling cycle;

determine, for each of the plurality of client devices, a scheduling weight of the client device based on a time interval from the previous scheduled time of the client device to a current scheduling cycle; and

schedule a wireless transmission to at least one of the plurality of client devices for the current scheduling cycle based on the scheduling weights.

100-A

Fig. 1A

100-B

AP

Clients

Fig. 1B

**200**

S210 Obtaining a previous scheduled time of each of a plurality of client devices at which each client device was scheduled by an access point during a respective previous scheduling cycle

S220 Determining, for each of the plurality of client devices, a scheduling weight of the client device based on a time interval from the previous scheduled time of the client device to a current scheduling cycle

S230 Scheduling a wireless transmission to at least one of the plurality of client devices for the current scheduling cycle based on the scheduling weights

Fig. 2

**300**

A *Rank First!*

B

C

D

E

F

*Candidate List*

| Client | Previous Scheduled Time | Client Priority | ··· |
|--------|------------------------|-----------------|-----|
| A | 20ms (1st cycle) | 1.2 | … |
| B | 180ms (3rd cycle) | 1.0 | … |
| C | 245ms (4th cycle) | 1.0 | … |
| D | 318ms (5th cycle) | 1.0 | … |
| E | 80ms (2nd cycle) | 1.0 | … |
| F | 345ms (6th cycle) | 0.9 | … |

Fig. 3

**400**

```
┌─────────────────────────────────────┐
│              START                   │
└─────────────────────────────────────┘
                  │
                  ▼
```

S401
┌─────────────────────────────────────────────────────────────┐
│ Starting a current scheduling cycle and recording a current time of │
│              the current scheduling cycle                     │
└─────────────────────────────────────────────────────────────┘

S402
┌─────────────────────────────────────────────────────────────┐
│ Obtaining a previous scheduled time for each wireless client device │
└─────────────────────────────────────────────────────────────┘

S403
┌─────────────────────────────────────────────────────────────┐
│ Calculating a respective time interval from the previous scheduled │
│   time to the current time for each wireless client device    │
└─────────────────────────────────────────────────────────────┘

S404
┌─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┐
│      Obtaining a priority level for each wireless client device    │
└─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┘

S405
┌─────────────────────────────────────────────────────────────┐
│    Determining a scheduling weight of each wireless client device  │
└─────────────────────────────────────────────────────────────┘

S406
┌─────────────────────────────────────────────────────────────┐
│  Ranking the wireless client devices based on the scheduling weights │
└─────────────────────────────────────────────────────────────┘

S407
┌─────────────────────────────────────────────────────────────┐
│ Scheduling a wireless transmission to a first wireless client device │
│  whose scheduling weight ranked first and updating the previous │
│     scheduled time for the first wireless client device       │
└─────────────────────────────────────────────────────────────┘

```
                  │
                  ▼
┌─────────────────────────────────────┐
│               END                    │
└─────────────────────────────────────┘
```

Fig. 4

**500**

**Candidate List**

| Client | Previous Scheduled Time | Client Priority | Client Mode | Nss Ratio | BW Ratio | ... |
|--------|------------------------|-----------------|-------------|-----------|----------|-----|
| A | 30ms (1st cycle) | 1.2 | SU | 1 | 1 | ... |
| B | 85ms (2nd cycle) | 1.0 | OFDMA | 1 | 0.4 | ... |
| C | 110ms (3rd cycle) | 1.0 | SU | 1 | 1 | ... |
| D | 145ms (4th cycle) | 1.0 | MU MIMO | 0.5 | 1 | ... |
| E | 85ms (2nd cycle) | 1.0 | OFDMA | 1 | 0.4 | ... |
| F | 145ms (4th cycle) | 0.9 | MU MIMO | 0.5 | 1 | ... |

Fig. 5

**600**

```
┌─────────────────────────────┐
│            START            │
└─────────────────────────────┘
```

S601 — Starting a current scheduling cycle and recording a current time of the current scheduling cycle

S602 — Obtaining a previous scheduled time for each wireless client device

S603 — Calculating a respective time interval from the previous scheduled time to the current time for each wireless client device

S604 — Obtaining a bandwidth ratio or a spatial stream ratio of each client devices during a previous scheduling cycle

S605 — Obtaining a priority level for each wireless client device

S606 — Determining a scheduling weight of each wireless client device

S607 — Ranking the wireless client devices based on the scheduling weights and determining a first wireless client device whose scheduling weight ranked first

S608 — SU mode? — N → S609 — MU-MIMO mode? — N → S610 — OFDMA mode?

S608 — Y

S609 — Y → S611 — Determining second wireless client(s) in MU-MIMO mode

S610 — Y → S612 — Determining second wireless client(s) in OFDMA mode

S613 — Scheduling the wireless transmission to the wireless client(s), and updating the previous scheduled time, bandwidth ratio or spatial stream ratio for the wireless client device(s)

```
┌─────────────────────────────┐
│            END              │
└─────────────────────────────┘
```

Fig. 6

**700**

Download 1
4K 1
4K 2
Browser 1
Browser 2
Browser 3

Approach 1      *971.5ms*

Approach 2      *860.4ms*

*Time*    *0*      *200*     *400*     *600*     *800*    *1000*

Fig. 7

**800**

840

PROCESSOR — 810      TRANSCEIVER — 830

MEMORY — 820

Fig. 8

Europäisches
Patentamt

European
Patent Office

Office européen
des brevets

# EUROPEAN SEARCH REPORT

**Application Number**

EP 25 20 8922

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/055653 A1 (SHIRANI-MEHR HOOMAN [US] ET AL) 3 March 2011 (2011-03-03) | 1,4,14, 15 | INV. H04W72/50 |
| Y | * paragraphs [0008], [0010], [0021], [0024], [0046], [0047], [0055], [0060] | 2,3, 10-13 | H04W84/12 |
| A | - [0067], [0081], [0083] * * figure 1 * | 5-9 | ADD. H04W72/121 H04W72/566 |
| Y | EP 4 460 127 A1 (RUIJIE NETWORKS CO LTD [CN]) 6 November 2024 (2024-11-06) | 2,3 | |
| A | * paragraphs [0032] - [0035] * | 1,4-15 | |
| Y | EP 1 469 640 A1 (LUCENT TECHNOLOGIES INC [US]) 20 October 2004 (2004-10-20) | 10-13 | |
| A | * paragraphs [0010] - [0014], [0024], [0025], [0058] - [0072], [0077], [0081], [0153], [0154] * | 1-9,14, 15 | |
| A | EP 3 086 611 A1 (ZTE CORP [CN]) 26 October 2016 (2016-10-26) * paragraphs [0018] - [0024], [0035] * | 1-15 | |

TECHNICAL FIELDS
SEARCHED    (IPC)

H04W

The present search report has been drawn up for all claims

| Place of search | Date of completion of the search | Examiner |
|---|---|---|
| The Hague | 13 March 2026 | Metozounve, Emeline |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

EP 4 770 249 A1

## ANNEX TO THE EUROPEAN SEARCH REPORT
## ON EUROPEAN PATENT APPLICATION NO.

EP 25 20 8922

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2026

| Patent document cited in search report | Publication date | Patent family member(s) | Publication date |
|---|---|---|---|
| US 2011055653 A1 | 03-03-2011 | US 2011055653 A1 | 03-03-2011 |
| | | US 2013061106 A1 | 07-03-2013 |
| | | US 2014362810 A1 | 11-12-2014 |
| | | WO 2011028583 A1 | 10-03-2011 |
| EP 4460127 A1 | 06-11-2024 | AU 2022425221 A1 | 18-07-2024 |
| | | EP 4460127 A1 | 06-11-2024 |
| | | US 2024114492 A1 | 04-04-2024 |
| | | WO 2023125579 A1 | 06-07-2023 |
| | | ZA 202405099 B | 26-02-2025 |
| EP 1469640 A1 | 20-10-2004 | DE 602004001083 T2 | 06-06-2007 |
| | | EP 1469640 A1 | 20-10-2004 |
| | | EP 1596541 A2 | 16-11-2005 |
| | | EP 1596542 A2 | 16-11-2005 |
| | | EP 1596543 A2 | 16-11-2005 |
| | | JP 2004320774 A | 11-11-2004 |
| | | KR 20040090440 A | 25-10-2004 |
| | | US 2004210619 A1 | 21-10-2004 |
| EP 3086611 A1 | 26-10-2016 | CN 104735786 A | 24-06-2015 |
| | | EP 3086611 A1 | 26-10-2016 |
| | | WO 2015090022 A1 | 25-06-2015 |

For more details about this annex : see Official Journal of the European Patent Office, No. 12/82

24

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 00616424